# EUROPEAN PATENT APPLICATION

(11) **EP 4 174 215 A1**
(43) Date of publication of application: **03.05.2023**
(21) Application number: 21205617.0
(22) Date of filing: 29.10.2021
(51) Int. Cl.: C25B 1/04, C25B 15/08, C01C 1/04, H02J 3/28

(54) **A METHOD OF CONFIGURING A PLANT FOR THE SYNTHESIS OF GREEN AMMONIA**

(71) Applicant: thyssenkrupp AG, 45143 Essen (DE); thyssenkrupp Industrial Solutions AG, 45143 Essen (DE)
(72) Inventor: Bagga, Karan, Melbourne, 3030 (AU); Mielke, Bernd, 58454 Witten (DE)
(74) Representative: thyssenkrupp Intellectual Property GmbH

(57) **Abstract**

The invention relates to a method for configuring a plant for the production of green ammonia using renewable energies for the production of hydrogen.

## Description

The invention relates to a method for configuring a plant for the production of green ammonia using renewable energies for the production of hydrogen.

Currently, hydrogen for the production of ammonia is produced from natural gas using steam reformers or auto thermal reformers. This ensures a constant supply of hydrogen and the ammonia converter can be operated continuously under constant operating conditions. The disadvantage is that this releases CO₂. To avoid this CO₂ from the reformation of natural gas, the production of green hydrogen by electrolysis with electricity from renewable energy sources is being pursued. However, the challenge is that renewable energies, especially solar and wind energy, are subject to strong fluctuations. This means that a constant supply of hydrogen cannot be guaranteed. Alternatively, an extremely large hydrogen storage facility would have to be provided to buffer out the fluctuation in the hydrogen supply to the ammonia loop. On the one hand, this increases the investment costs, and on the other, it requires space, which is not available in unlimited quantities.

Another issue is the integration of the hydrogen production with the synthesis loop for the most techno-economically optimum production of ammonia. If the electrolysis and the ammonia loop is chosen too small, continuous operation can be ensured, but not as much of the renewable energy as possible is used, which increases the production costs per tonne of ammonia. If the electrolyser and the ammonia loop is too large, however, the energy curtailment is minimised, but the high investment costs and idle times of the plant also lead to increased costs per tonne of ammonia.

The task of the invention is to find the optimum cost of a plant depending on the availability, type and quality of renewable energies.

This problem is solved by the method with the features specified in claim 1. Advantageous further developments result from the dependent claims and the following description.

The method according to the invention is used to configure a plant for the synthesis of ammonia and is also applicable for the synthesis urea, nitrates or other products like methanol. The aim of the plant is to produce green ammonia, that means without CO₂ emissions and by using renewable energies. The method thus serves to design the plant that allows this, with the focus on technical feasibility and life cycle cost optimisation in order to be able to offer the product ammonia at a competitive price on the market. The plant comprises at least a first device for generating regenerative energy from a first regenerative energy source, at least a water electrolysis device, a electric energy storage device, a hydrogen storage device and a converter. This means that hydrogen is not produced via steam reforming from natural gas. However, this means that the hydrogen flow that can be provided is dependent on the renewable energy source. The regenerative energy source is preferably wind power or solar energy but can be any form of renewable energy which may be naturally or deliberately intermittent in quality and quantity. Especially in areas with seismic activity, geothermal energy can also be used as a renewable energy source. Hydroelectric power or tidal power can also be used as regenerative energy sources. The converter is preferred a converter according to the Haber-Bosch-process. The method simulates the operation of the plant on the basis of historical and predictive data for the renewable energy source. During the simulation of the operation with the method at least the size of the water electrolysis device, the size of the hydrogen storage device and the size of the converter are adjusted. The aim is to find an optimum for the size ratio of the plant components to each other by adjusting the various sizes and simulating them using the historical data on the renewable energy source. Optionally, the size and mix of the renewable energy sources can also be adjusted to achieve maximum stability for the hydrogen production and conversion. However, since there are also locations where, for example, the size of this device is predefined for reasons of space or because an existing plant with a predefined size is to be used, the size of the device for generating renewable energy can be predefined and therefore not variable.

The method comprises the steps of:
a) Providing historical data on renewable energy production,
b) Determining an average value of the energy production from the historical data,
c) Determining the stability of the energy production taking into account the magnitude of the change and the rate of change of the energy production,
d) Varying the size of the water electrolysis device, the size of the hydrogen storage tank and the size of the converter and simulating the operation of the device to determine the total production amount and the total production cost,
e) Identifying the minimum cost.

Providing historical data in step a) also includes providing sets of data which are representative of the power generation in the region. In this case the historical data are already processed to a set of prediction data.

The determining of stability of the energy production in step b) can be done by characterising the energy production profile in form of intermittency and quantity.

The historical data according to step a) must enable a reliable statement and therefore cover a meaningful period of time. For example, in the case of solar energy or wind power, at least the period of one year is necessary in order to be able to represent the fluctuating conditions that result from the annual rhythm. Preferably, the historical data cover a large period of time, preferably at least two years, more preferably five to 20 years. This increases the probability of the accuracy of a prediction for the future, because this historical data serves to predict the fluctuating behaviour of the renewable energy source for the future. In a further embodiment, the historical data can be adapted via climate models for global warming in order to make a higher prediction accuracy for the future, in particular taking into account global warming, as this can improve the predictive accuracy compared to a prediction based on the historical data alone. This is particularly beneficial for hydro power based applications where rainfall may vary, which in turn could alter the dam levels and available energy.

In step b), a capacity factor value is first determined. This serves to determine a first rough guideline value of what is available at all as an output variable of renewable energy and thus what the maximum production capacity for ammonia can be. Especially if the size of the first device for generating regenerative energy can be adapted or a second first device for generating regenerative energy from a second regenerative energy source can be added or adapted in size, this can be used to get a starting point for the size of the water electrolysis device, the size of the hydrogen storage device and the size of the converter.

However, since the renewable energy does not have a perfect constant supply, the change is now taken into account in step c). The stability of the energy production will be determined by taking into account the magnitude of the change and the rate of change of the energy production.

If we look at solar energy, for example, in a perfect, permanently cloud-free environment there is a change that varies between 0 % at night and 100 % at noon. Here, the amount of change would be maximum, but the temporal change would be slow. In addition, there is a cyclical and predictable course.

However, if the same pattern is observed at a location with frequent dense cloud formation, on the one hand the total amount of energy generated is reduced. On the other hand, the changes are much more short-term, for example when clouds build up or dissipate again at midday in front of the device for producing regenerative energy. As a result, very large and very rapid changes can occur, which pose a greater challenge for the plant.

The above can of course also be applied to wind energy. Here, too, it depends not only on the total amount of energy but also on the stability.

In both cases, the lower the level of confirmation, the greater and faster the changes. And the greater the demands on the subsequent components of the plant. Therefore in step c) the stability of the energy production will be determined by taking into account the magnitude of the change and the rate of change of the energy production.

In step d), the size of the plant components is now varied. For each of the different configurations, a technical simulation of the operation of the plant is carried out with the historical data and the amount of ammonia produced is calculated. The costs for the construction of the plant can be determined from the size of the plants via economic modelling. Furthermore, the production costs can be determined during the simulation.

Thus, for each plant configuration, the costs incurred on the one hand and the quantity of ammonia produced on the other hand are determined. This analysis is truly end to end, i.e. from power generation to product dispatch.

From the data obtained in step d) for costs and production quantity, it can thus be determined in step e) for which configuration the lowest costs per tonne of ammonia produced are to be found.

Thus, the procedure differs radically from the previous procedures for the design of an ammonia plant. Previously, the production volume to be produced was specified first. This quantity determines the size of the converter. The size of the converter determines the size of the steam reformer. Thus, the size of the plant was practically calculated from the end side, the product side. The method according to the invention, on the other hand, works iteratively starting from the energy generation side.

In another embodiment of the invention, the device comprises at least a second device for producing regenerative energy from a second regenerative energy source. The maximum of the stability is determined in dependence of the ratio of the first regenerative energy source to the second regenerative energy source.

Here, the first renewable energy source differs from the second renewable energy source. For example and preferably, the first renewable energy source is solar energy and the second renewable energy source is wind energy. The advantage of this embodiment is that two different fluctuating energy sources are used. This allows the fluctuations to at least partially cancel each other out, so that the fluctuation in the overall energy supply is less than the fluctuation from each individual renewable energy source on its own.

Here, in a first step, before adjusting or calculating other parts of the plant, the stability of the energy production is made by means of step c) alone depending on the ratio between the first device for producing energy from the first renewable energy source and the second device for producing energy from the first renewable energy source. Thus, the mix of renewable energy that provides the highest stability is sought. It has been shown that the stability in the mix of two different renewable energies shows a minimum at 100 % of one renewable energy source only and a maximum at a mixture. The position of this maximum is strongly dependent on regional conditions. However, increasing the stability leads to a significant simplification of the system complexity and is therefore optimised as a first step.

In another embodiment of the invention is the amount of energy that can be generated from the first regenerative energy source or the second regenerative energy source fixed. In this case, the size of the first device for generating regenerative energy or the second device for generating regenerative energy can also be fixed, for example, because an existing wind farm or an existing solar field is to be used. Alternatively, the maximum size of the first device for generating regenerative energy or the second device for generating regenerative energy can also be fixed, for example if only a certain space is available for a wind farm, for example a ridge of hills.

In another embodiment of the invention, the plant has a connection to the electricity grid. The historical data for the electricity price is also provided. A threshold price is defined below which electricity can be withdrawn from the electricity grid. For industrial applications, the price of electricity in many regions is not fixed but time-dependent. Typically, however, significantly divergent prices occur only in very small amounts of time. These prices can be significantly higher, for example, when there is no wind and it is very hot (high energy consumption by air conditioning and low production at the same time). However, the prices can also be lower, the prices can even be negative, which means an economic is available when energy is taken from the grid. This is usually the case when renewable energies supply an extremely large amount of electricity and there is therefore a surplus available in the entire grid. This effect can then be used to reduce costs overall.

In another embodiment of the invention, the plant has a connection to the electricity grid. The plant provides grid balancing services as requested by the regulator to manage upsets in the grid frequency, In this scenario, the plant is load-shed in case of a trip of the power generator attached to the grid. The degree and pace of load shed determines the design of the plant and the required behaviour of the water electrolysis and the converter. The grid balancing services provide an alternative stream of revenue to the plant operator.

In another embodiment of the invention, a hot standby operation is defined for the converter if the hydrogen in the hydrogen storage falls below a minimum quantity. On the one hand, this allows the hydrogen storage tank to be refilled even when energy production is low, and on the other hand, the converter does not have to be designed for extremely low loads. Hot standby means that the converter is still kept at full operating temperature, only the feed of the educts, hydrogen and nitrogen, is stopped. Although this results in operating costs, there is no need to reheat the converter when it is restarted. Therefore, the period for hot standby is limited in time.

In another embodiment of the invention, the converter can also be shut down completely especially for a rest period of up to 10 days per year. Therefore even longer periods with limited energy can be bridged, for example no wind during winter.

In another embodiment of the invention, the maximum change in the load of the converter is predefined. For example, the change in the load of the converter can be set at a rate of 50 % of the maximum capacity of the converter per hour. For example, the converter could go from 50 % load to 75 % load in half an hour. For most current converters, this rate plays a subordinate role, as they are constantly supplied for years via a steam reformer and a load change is not necessary. Rapid load changes are therefore not necessary for conventional converters. For applications with a fluctuating hydrogen source, however, the change in load is a decisive factor. Therefore, a converter in which the load can be adjusted at, for example, 70 % of the maximum load per hour is preferred, as this converter can adapt to the changed conditions better than the first-mentioned converter. Therefore, it is advantageous if the rate of change is predefined, for example, if an existing converter is to be used with an existing rate. Likewise, the rate can be set according to the intended design of the converter. In this way, the simulation becomes more informative.

In another embodiment of the invention, the minimum utilisation of the converter is predetermined. There is a lower threshold of utilisation at which it does not make sense to operate the converter. If the load falls below this threshold, either a hot standby or a complete shutdown may make sense.

In another embodiment of the invention, the plant comprises an energy storage, the size of the energy storage being dimensioned in dependence on the stability of the power generation. The seasonal variations are also studied to develop a first pass estimate of the applicable energy storage medium for example, physical (capacitor), electrochemical (batteries), molecular (hydrogen) or thermal (molten salts).Through the additional integration of an energy storage device, for example a battery, a first equalisation of the fluctuation of the generatively generated energy can be achieved. In this way, it can be achieved in particular that the hydrogen generation and conversion does not have to immediately follow the electricity generation. In particular, both the hydrogen storage device and the energy storage device can be used to achieve an equalisation.

## Claims

1. A method of configuring a plant for the synthesis of ammonia, wherein the plant comprises at least a first device for generating regenerative energy from a first regenerative energy source, wherein the plant comprises at least a water electrolysis device, wherein the plant comprises a hydrogen storage device, wherein the plant comprises a converter, wherein the method simulates the operation of the plant on the basis of historical data, wherein in carrying out the method at least the size of the water electrolysis device, the size of the hydrogen storage device and the size of the converter are adjusted, wherein the method comprises the steps of:
a) Providing historical data on renewable energy production,
b) Determining an average value of the energy production from the historical data,
c) Determining the stability of the energy production taking into account the magnitude of the change and the rate of change of the energy production,
d) Varying the size of the water electrolysis device, the size of the hydrogen storage tank and the size of the converter and simulating the operation of the device to determine the total production amount and the total production cost,
e) Identifying the minimum cost.

2. Method according to claim 1, **characterized in that** the device comprises at least a second device for producing regenerative energy from a second regenerative energy source, wherein the maximum of the stability is determined in dependence of the ratio of the first regenerative energy source to the second regenerative energy source.

3. Method according to claim 2, **characterized in that** the amount of energy that can be generated from the first regenerative energy source or the second regenerative energy source is fixed.

4. Method according to any one of the preceding claims, **characterized in that** the plant has a connection to the electricity grid, wherein historical data for the electricity price is provided, wherein a threshold price is defined below which electricity can be withdrawn from the electricity grid.

5. Method according to any one of the preceding claims, **characterized in that** the plant has a connection to the electricity grid, wherein the amount and pace of load shedding is defined in order to provide frequency balancing services to the grid.

6. Method according to one of the preceding claims, **characterized in that** a hot standby operation is defined for the converter if the hydrogen in the hydrogen storage falls below a minimum quantity.

7. Method according to one of the preceding claims, **characterized in that** a rest period of up to 10 days per year is defined for the converter.

8. Method according to any one of the preceding claims, **characterized in that** a maximum change in the load of the converter is predefined.

9. Method according to one of the preceding claims, **characterized in that** a minimum utilisation of the converter is predetermined.

10. Method according to one of the preceding claims, **characterized in that** the plant comprises an energy storage, the size of the energy storage being dimensioned in dependence on the stability of the power generation.
